# FASCICULE DE BREVET EUROPEEN

(11) **EP 2 061 135 B1**
(45) Date de publication et mention de la délivrance du brevet: **08.03.2017**
(21) Numéro de dépôt: 08169091.9
(22) Date de dépôt: 14.11.2008
(51) Int. Cl.: H02K 5/22, H02K 11/00, H02K 7/14

(54) **Actionneur tubulaire pour écran domotique et son procédé d'assemblage**
Rohrförmiges Stellglied für Heimbildschirm und sein Montageverfahren
Tubular actuator for a home automation screen and method of assembling it

(30) Priorité: 16.11.2007 FR 0708062
(43) Date de publication de la demande: 20.05.2009
(73) Titulaire: SIMU, 70100 Gray (FR)
(72) Inventeur: Bresson, Christophe, 70700 Cugney (FR); Tyrode, Jérôme, 74240 Gaillard (FR)
(74) Mandataire: Lavoix

(56) Documents cités:
- EP-A- 0 603 119
- US-A- 3 299 913
- US-A- 4 000 764
- US-A- 4 673 231

## Description

La présente invention concerne les actionneurs tubulaires entraînant un écran domotique, tel qu'un volet roulant, un store, une porte enroulable ou analogue. L'invention concerne également un procédé d'assemblage d'un tel actionneur.

Comme cela est connu, par exemple, de FR-A-2 841 702, un actionneur tubulaire est généralement composé d'un tube à l'intérieur duquel viennent se loger un réducteur, un frein, un moteur constitué d'un stator et d'un arbre rotor, et un dispositif de contrôle de l'alimentation du moteur. L'assemblage classique d'un tel actionneur est décrit dans EP-B-0 603 119. Il comprend une première étape consistant à insérer le motoréducteur à l'intérieur du tube par une première extrémité. Les extrémités des fils électriques connectés au moteur sont ensuite extraites du tube, du coté de la seconde extrémité. Ces extrémités sont alors connectées au dispositif de contrôle. Enfin, celui-ci est inséré à l'intérieur du tube par la deuxième extrémité. Un tel assemblage se traduit par un rangement aléatoire des fils électriques à l'intérieur du tube, entre le dispositif de contrôle et le moteur, une fois l'actionneur assemblé. Cette configuration peut engendrer des problèmes si des éléments tournants sont disposés à ce niveau, entre le moteur et le dispositif de contrôle. En effet, si les fils ne sont pas rangés, ils peuvent s'accrocher avec l'élément tournant, ce qui risque de les endommager. Ce peut être notamment le cas avec certains actionneurs équipés d'une commande de secours dont la manoeuvre consiste à faire tourner l'arbre-rotor. L'arbre-rotor du moteur traverse alors le dispositif de contrôle, comme illustré dans EP-B-0 775 798. Cette problématique se pose également avec les actionneurs équipés de dispositifs de contrôle incorporant un dispositif de comptage basé sur la rotation de l'arbre-rotor. Celui-ci s'étend à partir du moteur pour atteindre le dispositif de contrôle où des capteurs mesurent la rotation de l'arbre. Pour ranger les fils, une solution consiste à modifier l'assemblage de l'actionneur. Tout d'abord, on extrait du tube les extrémités des fils électriques connectés au moteur. Parallèlement, on connecte au dispositif de contrôle d'autres fils électriques. Le dispositif de contrôle est ensuite inséré à l'intérieur du tube en maintenant les extrémités des fils électriques connectés au moteur et les extrémités des fils électriques connectés au dispositif de contrôle en dehors du tube. Une fois le dispositif de contrôle assemblé, les fils électriques sont tendus et coupés pour que leurs extrémités ne dépassent que faiblement du dispositif de contrôle. Enfin, les extrémités sont connectées entre elles de manière à ce que le dispositif de contrôle agisse effectivement sur l'alimentation du moteur. Ce procédé d'assemblage s'avère complexe et délicat à réaliser, nécessitant plusieurs opérations de connexions électriques coûteuses en temps et en argent.

C'est à ces inconvénients qu'entend plus particulièrement remédier l'invention en proposant un actionneur tubulaire pour écran domotique comprenant un tube, un moteur électrique inséré dans ce tube et un dispositif de contrôle de l'alimentation du moteur, également inséré dans ce tube, alors que le moteur et le dispositif de contrôle sont reliés par au moins un fil électrique souple. Cet actionneur est caractérisé en ce qu'il comprend des moyens de tension du fil électrique souple.

Pour s'assurer du bon fonctionnement de l'actionneur, il est souhaitable que ces moyens tendent tous les fils électriques pouvant être lâches à l'intérieur de l'actionneur. Ces fils sont alors rangés, c'est à dire qu'ils occupent un emplacement déterminé où ils ne risquent pas de s'abîmer ou de gêner le fonctionnement de l'actionneur. Aucune boucle de fils ne peut donc être en contact avec un élément tournant. L'utilisation de moyens de tension dédiés est plus pratique et sécurisante qu'une opération manuelle. En outre, l'assemblage de l'actionneur est plus rapide. De plus, l'invention permet de s'adapter à différentes longueurs de fils électriques.

De façon avantageuse, les moyens de tension comprennent une attache mobile par rapport au dispositif de contrôle et coopère avec une boucle formée par le fil électrique.

Préférentiellement, la tension du fil électrique souple est obtenue en éloignant une zone centrale du fil des deux extrémités connectées, c'est à dire en formant une boucle tendue. C'est un mode de réalisation plus facile à mettre en oeuvre que l'éloignement des extrémités l'une de l'autre. Pour tirer la boucle, il faut l'accrocher à une attache mobile. Ce peut être par le biais d'un crochet ouvert mais cette solution présente le risque que la boucle se décroche de l'attache mobile. Aussi, il est préférable que l'attache soit munie d'un orifice fermé à travers lequel passe le fil à tendre. Autrement dit, la boucle se loge dans cet orifice. De manière avantageuse, l'attache est un crochet fermé par un moyen escamotable. La boucle est alors très facile à fixer sur l'attache. Il suffit d'ouvrir le crochet afin d'y insérer la boucle. Ainsi, la tension du fil est obtenue, d'une part, par la variation de la distance relative entre un connecteur de raccordement du fil sur le moteur et l'attache mobile et, d'autre part, par la variation de la distance relative entre un connecteur de raccordement du fil sur le dispositif de contrôle et l'attache mobile.

Pour que la tension soit maintenue, il est nécessaire que la position de l'attache mobile ne puisse pas varier lorsque la tension souhaitée est obtenue. Les moyens de tension sont préférablement équipés d'un organe de maintien coopérant avec l'attache mobile et permettant de bloquer le mouvement de l'attache mobile selon la direction de tension du fil dans une position où la tension souhaitée du fil est obtenue. Ce peut être la coopération entre au moins une dent et un crantage correspondant. Cette solution permet d'avoir une bonne maîtrise de la tension puisque chaque cran correspond à un déplacement déterminé de la boucle. Il est possible d'avoir une information sonore relative à la mise sous tension du fil, chaque passage de cran générant un bruit caractéristique. Le niveau de tension peut également être indiqué par un repère visuel lié aux moyens de tension.

Deux alternatives sont envisageables pour actionner ces moyens de tension.

La première alternative consiste en une opération manuelle directe sur l'attache mobile lorsque le dispositif de contrôle a été inséré dans le tube ou lors de cette insertion. Ce peut être une languette prolongeant l'attache mobile et traversant le dispositif de contrôle, de manière à ce qu'elle soit accessible de l'extérieur de l'actionneur une fois assemblé. Ainsi, les fils peuvent être tendus par une action de traction manuelle après ou en même temps que l'insertion du dispositif de contrôle à l'intérieur du tube. En actionnant simultanément la languette et l'insertion du dispositif de contrôle, cela évite d'avoir un fil lâche pouvant se coincer entre le dispositif et une partie du tube équipé du motoréducteur lors de l'assemblage du dispositif. L'opération manuelle permet de s'assurer que les fils sont effectivement tendus. La tension peut également être variable. L'opérateur peut tirer plus ou moins les fils et ne pas forcer sur les connecteurs de raccordement du ou des fils sur le moteur et le dispositif de contrôle. Cependant, l'opérateur a peu d'information sur la tension effective du ou des fils électriques. Il peut donc trop tirer dessus, au risque de le ou les déconnecter, ou pas assez, auquel cas un fil trop lâche peut être en contact avec un élément tournant. D'autre part, il est nécessaire d'utiliser un outil pour couper la partie de la languette dépassant de l'actionneur.

Pour éviter cela, la deuxième alternative consiste à équiper l'actionneur de moyens de tension automatique du fil lors de l'assemblage du dispositif de contrôle dans le tube équipé du moteur. La tension du fil électrique s'ajuste automatiquement au moment de l'assemblage, pour atteindre une tension prédéfinie. La tension du fil est donc maîtrisée. L'utilisation d'une bague crantée intérieurement longitudinalement coopérant avec au moins une dent de l'attache mobile peut être une solution pour réaliser les moyens de tension automatique. Le niveau de tension du fil est déterminé par la conception et les dimensions réelles des pièces.

L'invention concerne également un procédé d'assemblage d'un actionneur tubulaire tel que mentionné ci-dessus, ce procédé comprenant au moins les étapes suivantes :
- insertion du moteur à l'intérieur du tube ;
- extraction, en dehors du tube, de l'extrémité des fils électriques connectés au moteur ;
- connexion des fils électriques avec le dispositif de contrôle ;
- insertion du dispositif de contrôle à l'intérieur du tube ; et
- mise en tension d'au moins un fil électrique connecté au moteur pendant ou après l'insertion du dispositif de contrôle dans le tube.

L'invention sera mieux comprise à la lecture de la description qui va suivre, donnée uniquement à titre d'exemple et faite en se référant aux dessins annexés sur lesquels :
- la figure 1 est une vue en perspective d'éléments constitutifs du dispositif de contrôle d'un actionneur conforme à un premier mode de réalisation de l'invention
- les figures 2 à 5 sont des coupes partielles d'un actionneur représentant les différentes étapes d'assemblage d'un premier mode de réalisation selon l'invention ;
- les figures 6 à 8 sont des coupes partielles d'un actionneur représentant les différentes étapes d'assemblage d'un deuxième mode de réalisation selon l'invention.

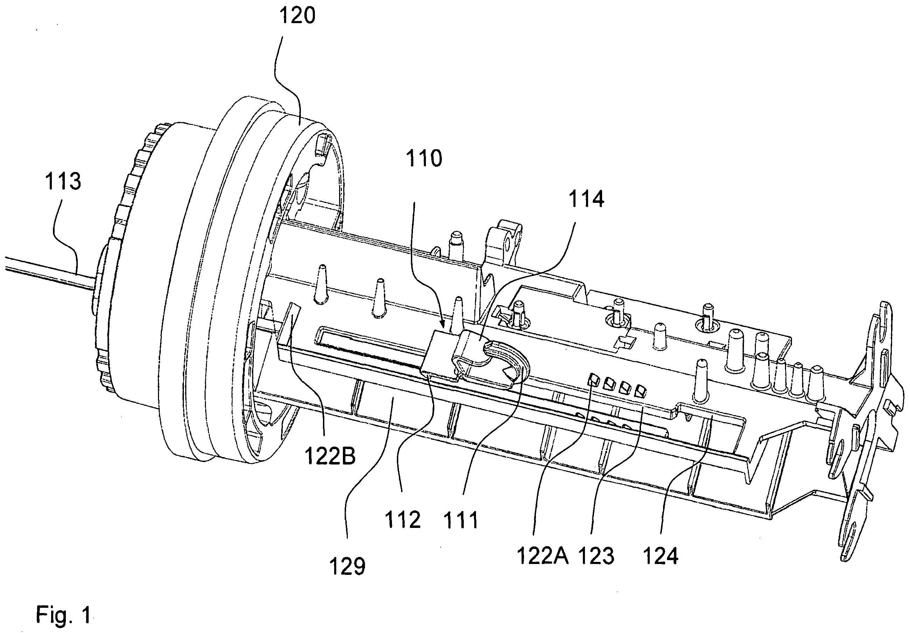

Les figures 1 à 5 illustrent un premier mode de réalisation d'un actionneur A selon l'invention.

L'actionneur comprend un dispositif de contrôle 120 destinée à contrôler l'alimentation d'un moteur 10, de type motoréducteur, inséré dans un tube 20. Pour assurer cette fonction, le dispositif de contrôle 120 et le moteur 10 sont reliés par des fils d'alimentation 1, d'un coté, via un connecteur 21 du dispositif de contrôle et, de l'autre coté, via un connecteur 11 du moteur. D'autre part, le dispositif de contrôle est équipé d'une attache mobile 110 comprenant un corps 115 sur lequel sont fixés un crochet 111, un clip équipé d'une dent 112, une languette 113 et une patte élastique 114. Une boucle 2 formée à partir des fils électriques 1 est placée dans l'arc du crochet 111. La patte élastique 114 ferme le crochet, d'empêchant ainsi la boucle de sortir du crochet. Ainsi, l'éloignement de l'attache mobile 110 par rapport aux connecteurs entraîne la tension des fils électriques 1.

On note X₂₀ l'axe longitudinal du tube 20.

Selon ce mode de réalisation, l'attache mobile 110 peut être déplacée axialement par rapport au dispositif de contrôle 120 grâce au profil du corps 115, semblable à un « I », coopérant avec à une rainure 123 ménagée sur le corps 129 du dispositif 120. La largeur de cette rainure 123 est légèrement supérieure à l'épaisseur de l'âme du corps 115. Ainsi, le déplacement radial, par rapport à l'axe X₂₀, du corps 115 est limité par la rainure 123. Les parties basse et haute du corps 115 étant plus larges que la rainure 123, elles butent contre celle-ci en cas de mouvement relatif radial. La languette 113 est attachée à la partie basse du corps 115. En pratique, les pièces 113 et 115 sont monoblocs. Pour déplacer l'attache mobile 110, il faut agir sur la languette 113. Celle-ci doit donc être accessible une fois l'actionneur A assemblé. Par conséquent, un orifice 124 est prévu dans le dispositif de contrôle pour permettre le passage de la languette.

La position axiale, le long de l'axe X₂₀, de l'attache mobile 110 est indexée par la dent 112 du clip coopérant avec un crantage 122 disposé sur le corps 129 du dispositif de contrôle. Le crantage n'est pas nécessairement continu sur toute la course de l'attache mobile. Il peut y avoir des crans 122A au début de course pour maintenir l'attache en position lors de l'insertion de la boucle dans le crochet et/ou d'autres crans 122B, en fin de course, pour obtenir la tension variable souhaitée des fils électriques 1.

Pour s'assurer que l'attache mobile est bien positionnée par rapport au dispositif 120 et donc avoir une indication sur la tension des fils, plusieurs moyens peuvent être utilisés. Ce peut être une information sonore. Chaque passage de la dent 112 sur un cran 122A ou 122B correspondant génère un bruit caractéristique qui permet de comptabiliser le nombre de dents passées. L'information peut également être visuelle. La languette peut intégrer un repère 114 qui apparaît hors du corps du dispositif 120 seulement lorsque l'attache mobile a atteint une certaine position par rapport au dispositif 120. Il peut y avoir plusieurs repères visuels, pour indiquer différents niveaux de tension.

La rainure 123 du dispositif de contrôle comprend, en outre, une ouverture radiale 124 en extrémité interne. Cette ouverture est nécessaire pour introduire le corps de l'attache mobile dans la rainure. La rainure 123 est parallèle à l'axe X₂₀ lorsque le dispositif 120 est en cours d'insertion ou inséré dans le tube 20.

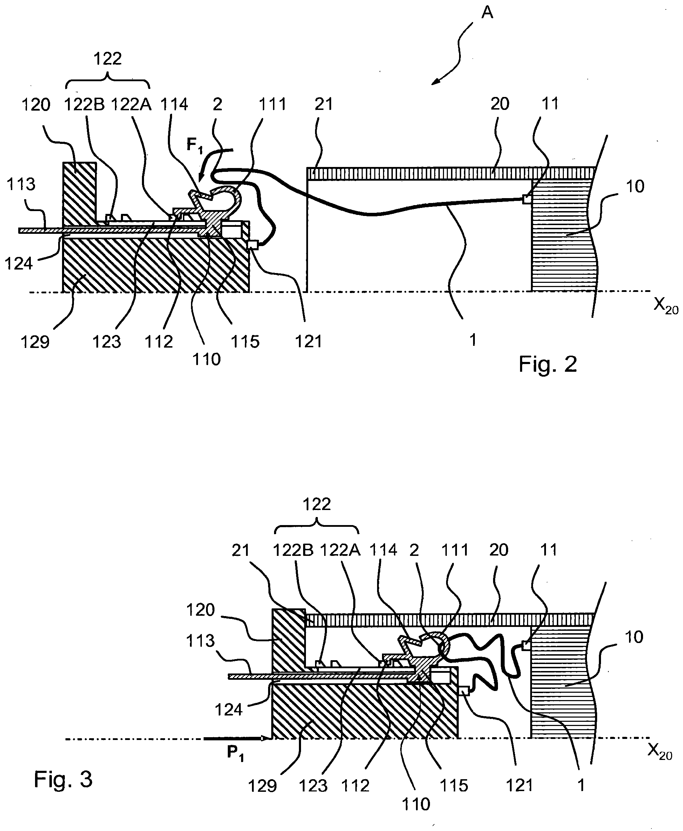

Les figures 2 à 5 précisent le mode d'assemblage du dispositif de contrôle de l'actionneur. Les étapes précédentes du montage de l'actionneur sont classiques. Une fois le moteur inséré dans le tube par une première extrémité, les fils d'alimentation 1, raccordés au moteur 10 par le connecteur 11, sont extraits du tube 20 par sa seconde extrémité 21. Ces fils d'alimentation sont alors enfichés sur le connecteur 121 du dispositif de contrôle. Une fois les fils connectés, une boucle 2 formée à partir des fils électriques est insérée entre le crochet 111 et la patte 114 de l'attache mobile 110, comme le montre la flèche F₁ à la figure 2. Cette insertion a lieu grâce à une déformation élastique du crochet 111 et/ou de la patte 114 qui sont avantageusement en matière synthétique, comme les autres éléments constitutifs de l'attache 110 avec lesquels ils sont monoblocs.

Le dispositif de contrôle est alors introduit dans le tube par son extrémité 21 suite à une poussée axiale P₁, comme illustré à la figure 3. Les fils électriques sont alors détendus.

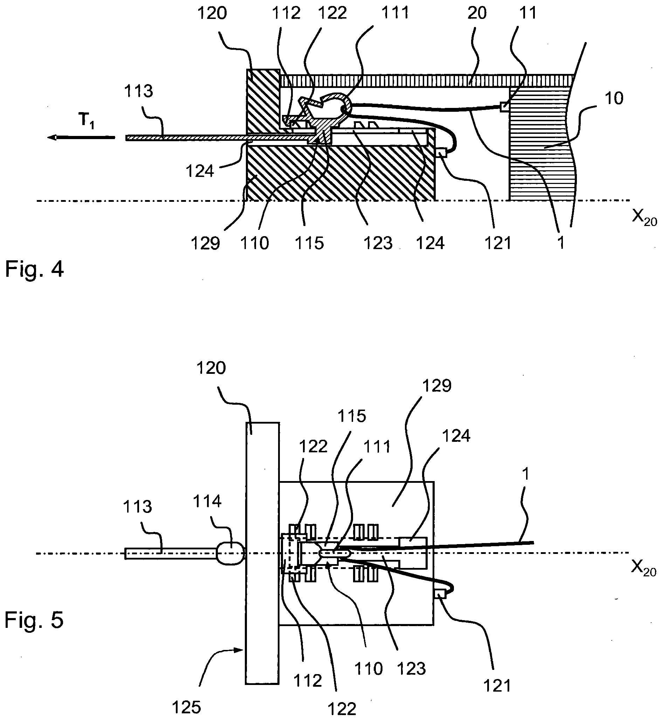

Les figures 4 et 5 décrivent le principe de mise sous tension des fils. La languette 113 est tirée par une traction T₁, ce qui provoque le déplacement de l'attache mobile 110 par rapport aux connecteurs 11 et 121 et, par conséquent, la tension des fils 1 entre les connecteurs 11 et 121. La traction T₁ est arrêtée lorsque le repère 114 est visible et/ou lorsqu'un certain nombre de cliquetis a été entendu.

Alternativement, la traction T₁ est effectuée simultanément à la poussée P₁ du dispositif de contrôle. Cette variante permet d'éviter des coincements malencontreux des fils électriques lors du montage du dispositif de contrôle dans l'actionneur.

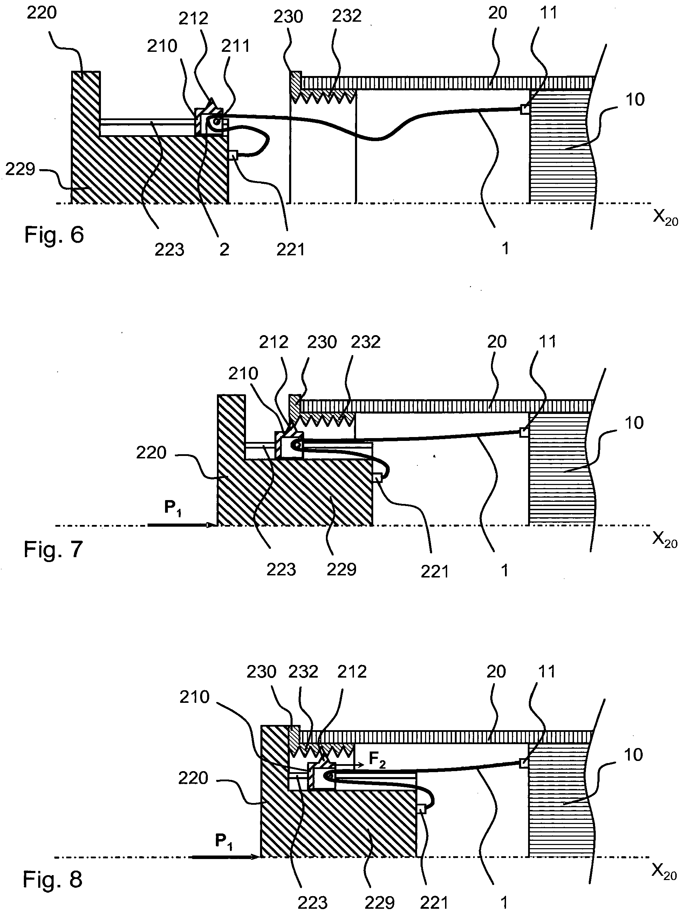

Les figures 6 à 8 décrivent un deuxième mode de réalisation d'un actionneur selon l'invention. Les pièces 1, 10, 11 et 20 sont identiques à celles du premier mode de réalisation et l'on note X₂₀ l'axe longitudinal du tube 20.

Un dispositif de contrôle 220 comprend également une attache mobile 210. Cette attache mobile se déplace axialement le long d'une rainure 223 ménagée dans le corps 229 du dispositif 220 et parallèle à l'axe X₂₀ dans les mêmes conditions que la rainure 123 du premier mode de réalisation. Des moyens analogues au mode de réalisation précédent permettent de maintenir l'attache 110 radialement, par rapport à l'axe X₂₀, au niveau de la rainure 223. L'attache 210 comprend, en outre, un moyen de retenue d'une boucle 2 formée par les fils d'alimentation 1. Ce moyen peut être un crochet, comme vu précédemment, une ouverture ou un pion 211 autour duquel s'enroule la boucle. D'autres moyens peuvent être envisagés.

Enfin, l'attache comporte une dent 212 s'étendant radialement vers le tube 20 lorsque le dispositif 220 est en place dans le tube. Cette dent coopère avec un crantage 232 disposé sur l'intérieur d'une bague 230 préalablement inséré dans le tube et en contact avec le diamètre intérieur du tube. Le crantage 232 peut être omis partiellement sur la périphérie intérieure de la bague 230. Dans ce cas, la bague et le dispositif de contrôle doivent être indexés afin que la dent puisse effectivement coopérer avec le crantage. Le crantage doit préférentiellement être continu axialement. Le positionnement de la rainure 223 et, par conséquent, de l'attache mobile 210 est tel que la dent 212 coopère avec le crantage 232 lorsqu'elle est à son niveau axial. Pour faciliter le passage d'un cran, la dent peut être légèrement élastique ou disposée en extrémité d'un support élastique tel qu'un clip, comme c'est le cas dans le premier mode de réalisation.

Les figures 6 à 8 représentent l'assemblage du dispositif de contrôle 220 et du tube 20 de l'actionneur et le principe de la mise en tension des fils. La première étape consiste à extraire les fils d'alimentation du tube équipé du moteur 10. Les fils sont alors enfichés sur un connecteur 221 du dispositif 220. Puis, une boucle 2 des fils est insérée dans l'attache mobile 210, autour du pion 211. L'attache mobile est alors introduite dans la rainure 223, comme le montre la figure 6. Cet ordre d'assemblage peut être inversé.

Le dispositif de contrôle 220 est ensuite introduit dans le tube par une poussée axiale P₁. Lorsque la dent 212 entre en contact avec le premier cran de la bague 230, le mouvement axial de l'attache, qui est rigide, est bloqué. Si on poursuit la poussée P₁, le connecteur 221 du dispositif de contrôle est déplacé à l'intérieur du tube 20 entraînant ainsi le déplacement de l'extrémité des fils par rapport à l'attache rigide bloquée. Ainsi, les fils se tendent, comme illustré à la figure 7. Quand les fils sont tendus et lorsqu'on poursuit la poussée P₁, l'attache mobile 210 est entraînée par une traction exercée par les fils 1, du fait que le connecteur 221 du dispositif de contrôle 220 continue à être déplacé en direction du moteur 10. L'attache mobile 210 se déplace alors dans le sens de la flèche F₂ à la figure 8.

La dent 212 liée à l'attache mobile passe alors successivement un ou plusieurs des crans du crantage 232. La tension des fils 1 est déterminée par le dimensionnement de la dent 212 et du crantage 232. Ainsi, c'est l'effort résultant d'un passage de cran par la dent qui correspond à la tension appliquée sur les fils 1. Le réglage de la tension est donc automatique lors de l'insertion du dispositif de contrôle. Pour régler sa valeur, on peut en variante prévoir un moyen modifiant la raideur d'un clip au bout duquel se situe la dent 212. Une autre possibilité consiste à utiliser différentes combinaisons de dent et de crantage ayant des dimensions spécifiques. Il suffit alors de changer la bague ou l'attache rigide.

Afin de ne pas détériorer la connectique, des formes spécifiques peuvent être prévues sur le dispositif de contrôle 220 et/ou sur l'extrémité du moteur 10 pour coincer les fils et éviter de tirer directement sur les connecteurs 11 et 221. Ce peut être des pions formant des chicanes dans lesquelles viennent se loger les fils 1.

L'invention a été représentée avec un trait représentant plusieurs fils d'alimentation 1. Toutefois, les différents fils ne sont pas forcément jointifs sur leur longueur entre leurs connecteurs d'extrémité 11 et 121 ou 221.

## Revendications

1. Actionneur tubulaire (A) pour un écran domotique, cet actionneur comprenant :
- un tube (20),
- un moteur électrique (10), inséré dans le tube et
- un dispositif (120; 220) de contrôle de l'alimentation du moteur, inséré dans le tube,
le moteur et le dispositif de contrôle étant reliés par au moins un fil électrique souple (1), **caractérisé en ce que** l'actionneur tubulaire comprend des moyens (110, 210) de tension du fil électrique (1).

2. Actionneur tubulaire selon la revendication 1, **caractérisé en ce que** les moyens de tension comprennent une attache (110 , 210) mobile par rapport au dispositif de contrôle (120 ; 220) et coopère avec une boucle (2) formée par le fil électrique (1).

3. Actionneur tubulaire selon la revendication 2, **caractérisé en ce que** la tension du fil (1) est obtenue, d'une part, par la variation de la distance relative entre un connecteur (11) de raccordement du fil électrique sur le moteur (10) et l'attache mobile (110 ; 210) et, d'autre part, par la variation de la distance relative entre un connecteur (121 ; 221) de raccordement du fil électrique sur le dispositif de contrôle (120 ; 220) et l'attache mobile.

4. Actionneur tubulaire selon l'une des revendications 1 à 3, **caractérisé en ce que** les moyens de tension comprennent en outre un organe de maintien (122 ; 230), coopérant avec l'attache mobile (110; 210) et, permettant de maintenir l'attache mobile dans une position (figure 4 ; figure 8) où la tension souhaitée du fil (1) est obtenue.

5. Actionneur tubulaire selon la revendication 4, **caractérisé en ce que** le maintien en position de l'attache mobile (110; 210) par rapport à la pièce de maintien est obtenu par au moins une dent (112; 212) coopérant avec un crantage (122 ; 232).

6. Actionneur tubulaire selon l'une des revendications précédentes, **caractérisé en ce que** le déplacement de l'attache mobile (110) est généré par une traction manuelle (T₁) directe sur l'attache mobile lorsque le dispositif de contrôle (120) a été inséré dans le tube (20) ou en même temps que son insertion.

7. Actionneur tubulaire selon la revendication 6, **caractérisé en ce que** :
- le dispositif de contrôle (120) de l'alimentation du moteur (10) comprend un corps (129) portant les crans (122A, 122B) coopérant avec au moins une dent (112) disposée sur l'attache mobile (110), et
- l'attache mobile est guidée en translation axiale par le corps (129) et se prolonge (113) au-delà du châssis, de manière à être accessible une fois le dispositif de contrôle assemblé dans le tube (20) équipé du moteur (10).

8. Actionneur tubulaire selon l'une des revendications 1 à 5, **caractérisé en ce qu'**il comprend des moyens (210) de tension automatique du fil électrique (1) lors de l'assemblage du dispositif de contrôle (220) dans le tube (20) équipé du moteur (10).

9. Actionneur tubulaire selon la revendication 8 **caractérisé en ce que** :
- une bague (230), munie d'un crantage interne (232) selon une direction axiale, est insérée dans le tube (20), et
- l'attache mobile (210) est guidée en translation axiale par un corps (229) supportant le dispositif de contrôle et munie d'au moins une dent (212) coopérant avec le crantage (232) de la bague.

10. Procédé d'assemblage d'un actionneur tubulaire (A) tel que défini dans l'une des revendications précédentes, comprenant au moins les étapes suivantes :
- insertion du moteur (10) à l'intérieur du tube (20) ;
- extraction, en dehors du tube, de l'extrémité des fils électriques (1) connectés au moteur ;
- connexion des fils électriques avec le dispositif de contrôle (120 ; 220) ;
- insertion (P₁) du dispositif de contrôle à l'intérieur du tube **caractérisé en ce qu'**il comprend, en outre,
- une étape consistant à tendre au moins un fil électrique (1) connecté au moteur (10), pendant ou après l'insertion du dispositif de contrôle (120 ; 220) dans le tube (20).

## Patentansprüche

1. Rohrförmige Stellvorrichtung (A) für einen Gebäudeschutzschirm, wobei die Stellvorrichtung umfasst:
- ein Rohr (20),
- einen elektrischen Motor (10), der in das Rohr eingesetzt ist, und
- eine Vorrichtung (120; 220) zum Steuern der Versorgung des in das Rohr eingesetzten Motors,
wobei der Motor und die Steuervorrichtung durch mindestens eine biegbare elektrische Leitung (1) verbunden sind,
**dadurch gekennzeichnet, dass** die rohrförmige Stellvorrichtung Mittel (110, 210) zum Spannen der elektrischen Leitung (1) umfasst.

2. Rohrförmige Stellvorrichtung nach Anspruch 1, **dadurch gekennzeichnet, dass** die Mittel zum Spannen ein in Bezug auf die Steuervorrichtung (120; 220) bewegliches Befestigungsteil (110, 210) umfasst, das mit einer von der elektrischen Leitung gebildeten Schleife (2) zusammenarbeitet.

3. Rohrförmige Stellvorrichtung nach Anspruch 2, **dadurch gekennzeichnet, dass** die Spannung der Leitung (1) einerseits durch Veränderung des relativen Abstands zwischen einem Anschlussverbinder (11) der elektrischen Leitung an dem Motor (10) und dem beweglichen Befestigungsteil (110; 210) und andererseits durch die Änderung des relativen Abstands zwischen dem Anschlussverbinder (121; 221) der elektrischen Leitung an der Steuervorrichtung (120; 220) und dem beweglichen Befestigungsteil erhalten wird.

4. Rohrförmige Stellvorrichtung nach einem der Ansprüche 1 bis 3, **dadurch gekennzeichnet, dass** die Mittel zum Spannen außerdem ein Halteelement (122; 230) umfassen, die mit dem beweglichen Befestigungsteil (110; 210) zusammenarbeiten und gestatten, das bewegliche Befestigungsteil in einer Position (Figur 4; Figur 8) zu halten, in der die gewünschte Spannung der Leitung (1) erreicht wird.

5. Rohrförmige Stellvorrichtung nach Anspruch 4, **dadurch gekennzeichnet, dass** das Instellunghalten des beweglichen Befestigungsteils (110; 210) in Bezug auf das Halteelement durch mindestens einen Zahn (112; 212) erreicht wird, der mit einer Rastung (122; 232) zusammenarbeitet.

6. Rohrförmige Stellvorrichtung nach einem der vorhergehenden Ansprüche, **dadurch gekennzeichnet, dass** die Verschiebung des beweglichen Befestigungsteils (110) durch einen direkten manuellen Zug (T₁) auf das bewegliche Befestigungsteil erzeugt wird, wenn die Steuervorrichtung (120) in das Rohr (20) eingesetzt wurde oder zur gleichen Zeit mit seinem Einsetzen.

7. Rohrförmige Stellvorrichtung nach Anspruch 6, **dadurch gekennzeichnet, dass**:
- die Vorrichtung (120) zum Steuern der Versorgung des Motors (10) einen Körper (129) umfasst, der Rasten (122A, 122B) trägt, die mit mindestens einem an dem beweglichen Befestigungsteil (110) angeordneten Zahn (112) zusammenarbeiten, und
- das bewegliche Befestigungsteil in axialer Längsbewegung durch den Körper (129) geführt wird und sich über ein Gestell hinaus verlängert (113), derart, dass es zugänglich ist, sobald die Steuervorrichtung in das mit dem Motor(10) ausgerüsteten Rohr (20) eingesetzt ist.

8. Rohrförmige Stellvorrichtung nach einem der Ansprüche 1 bis 5, **dadurch gekennzeichnet, dass** sie Mittel (210) zum automatischen Spannen der elektrischen Leitung (1) bei dem Einsetzen der Steuervorrichtung (220) in das mit dem Motor(10) ausgerüsteten Rohr (20) umfasst.

9. Rohrförmige Stellvorrichtung nach Anspruch 8, **dadurch gekennzeichnet, dass**:
- ein Ring (230), der mit einer Innenrastung (232) gemäß einer axialen Richtung versehen ist, in das Rohr (20) eingesetzt ist, und
- das bewegliche Befestigungsteil (210) von einem die Steuervorrichtung tragenden Körper (229) in axialer Längsbewegung geführt ist und mit mindestens einem Zahn (212) ausgerüstet ist, der mit der Rastung (232) des Rohrs zusammenarbeitet.

10. Verfahren zum Zusammensetzen einer rohrförmigen Stellvorrichtung (A), wie sie in einem der vorhergehenden Ansprüche definiert ist, mindestens die folgenden Schritte umfassend:
- Einsetzen eines Motors (10) in das Innere des Rohrs (20);
- Herausziehen des Endes der mit dem Motor verbundenen elektrischen Leitungen (1) aus dem Rohr heraus;
- Verbinden der elektrischen Leitungen mit der Steuervorrichtung (120; 220);
- Einsetzen (P₁) der Steuervorrichtung in das Innere des Rohrs,
**dadurch gekennzeichnet, dass** es außerdem umfasst
- einen Schritt, der darin besteht, mindestens eine mit dem Motor (10) verbundene elektrische Leitung (1) während oder nach dem Einsetzen der Steuervorrichtung (120; 220) in das Rohr (20) zu spannen.

## Claims

1. Tubular actuator (A) for a home automation screen, wherein this actuator comprises:
• a tube (20),
• an electric motor (10) inserted into the tube, and
• a control device (120; 220) for power supply to the motor inserted into the tube,
wherein the motor and the control device are connected by at least one flexible electric wire (10).
**characterised in that** the tubular actuator comprises tensioning means for the electric wire (1).

2. Tubular actuator according to claim 1, **characterised in that** the tensioning means comprise a fastener (110; 220) that is movable in relation to the control device (120; 220) and cooperates with a loop (2) formed by the electric wire (10).

3. Tubular actuator according to claim 2, **characterised in that** the tension of the wire (1) is obtained, on the one hand, by varying the relative distance between a connector (11) for joining the electric wire on the motor (10) and the movable fastener (110; 220) and, on the other hand, by varying the relative distance between a connector (121; 221) for joining the electric wire on the control device (120; 220) and the movable fastener.

4. Tubular actuator according to one of claims 1 to 3, **characterised in that** the tensioning means additionally comprise a holding element (122; 230), which cooperates with the movable fastener (110; 210) and enables the movable fastener to be held in a position (Figure 4; Figure 8) where the desired tension of the electric wire (1) is obtained.

5. Tubular actuator according to claim 4, **characterised in that** holding the movable fastener (110; 210) in position in relation to the holding part is achieved by at least one tooth (112; 212), which cooperates with a catch arrangement (122; 232).

6. Tubular actuator according to one of the preceding claims, **characterised in that** the displacement of the movable fastener (110) is generated by manual pulling (T₁) directly on the movable fastener when the control device (120) has been inserted into the tube (20) or at the same time as its insertion.

7. Tubular actuator according to claim 6, **characterised in that**:
• the control device (120) for power supply to the motor (10) comprises a body (129) having notches (122A, 122B), which cooperate with at least one tooth (112) arranged on the movable fastener (110), and
• the movable fastener is guided to perform an axial translation movement by the body (129) and extends (113) beyond the underframe so as to be accessible once the control device is assembled in the tube (20) fitted with the motor (10).

8. Tubular actuator according to one of claims 1 to 5, **characterised in that** it comprises automatic tensioning means (210) for the electric wire (1) during assembly of the control device (220) in the tube (20) fitted with the motor (10).

9. Tubular actuator according to claim 8, **characterised in that**:
• a ring (230) fitted with an internal catch arrangement in an axial direction is inserted into the tube (20), and
• the movable fastener (210) is guided to perform an axial translation movement by a body (229) supporting the control device and fitted with at least one tooth (212), which cooperates with the catch arrangement (232) of the ring.

10. Process of assembly of a tubular actuator (A) as defined in one of the preceding claims, comprising at least the following steps:
• inserting the motor (10) inside the tube (20);
• pulling the end of the electric wires (10) connected to the motor outside the tube;
• connecting the electric wires with the control device (120; 220);
• inserting (P₁) the control device inside the tube,
**characterised in that** it additionally comprises:
• a step consisting of tightening at least one electric wire (1) connected to the motor (10) during or after insertion of the control device (120; 220) into the tube (20).
